Europäisches Patentamt

European Patent Office

Office européen des brevets

(19)

(11) Veröffentlichungsnummer : **0 064 234**
**B1**

(12) **EUROPÄISCHE PATENTSCHRIFT**

(45) Veröffentlichungstag der Patentschrift :
**18.09.85**

(51) Int. Cl.⁴ : **H 01 M 10/39**

(21) Anmeldenummer : **82103427.9**

(22) Anmeldetag : **23.04.82**

(54) **Elektrochemische Speicherzelle.**

(30) Priorität : **02.05.81 DE 3117384**

(43) Veröffentlichungstag der Anmeldung :
**10.11.82 Patentblatt 82/45**

(45) Bekanntmachung des Hinweises auf die Patenterteilung : **18.09.85 Patentblatt 85/38**

(84) Benannte Vertragsstaaten :
**BE FR GB IT NL**

(56) Entgegenhaltungen :
**FR-A- 2 153 134**
**FR-A- 2 292 346**
**US-A- 4 110 516**
**US-A- 4 135 040**
**US-A- 4 166 156**
**US-A- 4 246 325**

(73) Patentinhaber : **BROWN, BOVERI & CIE Aktiengesellschaft**
**Kallstadter Strasse 1**
**D-6800 Mannheim 31 (DE)**

(72) Erfinder : **Fischer, Wilfried, Dr., Dipl.-Phys.**
**Am Kastanienberg 27**
**D-6930 Neckargemünd (DE)**
Erfinder : **Hasenauer, Dieter**
**Freudenbergstrasse 13**
**D-6940 Weinheim (DE)**

(74) Vertreter : **Kempe, Wolfgang, Dr. et al**
**c/o BROWN, BOVERI & CIE AG Kallstadter Strasse 1**
**Postfach 351**
**D-6800 Mannheim 31 (DE)**

## Beschreibung

Die Erfindung bezieht sich auf eine elektrochemische Speicherzelle gemäß dem Oberbegriff des Patentanspruchs 1.

Solche wiederaufladbaren elektrochemischen Speicherzellen mit Festelektrolyten eignen sich sehr gut zum Aufbau von Akkumulatoren mit hoher Energie- und Leistungsdichte.Die in den Alkali/Chalkogen-Speicherzellen verwendeten Festelektrolyten, die beispielsweise aus Beta-Aluminiumoxid gefertigt sind, zeichnen sich dadurch aus, daß die Teilleitfähigkeit des beweglichen Ions sehr hoch und die Teilleitfähigkeit der Elektronen um vielfache Zenerpotenzen kleiner ist. Durch die Verwendung solcher Festelektrolyten für den Aufbau von elektrochemischen Speicherzellen wird erreicht, daß praktisch keine Selbstentladung stattfindet, da die Elektronenleitfähigkeit vernachlässigbar ist, und die Reaktionssubstanzen auch nicht als neutrale Teilchen durch den Festelektrolyten gelangen können.

Ein spezielles Beispiel für solche wiederaufladbaren elektrochemischen Speicherzellen sind die auf der Basis von Natrium und Schwefel,deren Festelektrolyt aus Beta-Aluminiumoxid gefertigt ist. Ein Vorteil dieser elektrochemischen Speicherzellen besteht darin, daß beim Laden keine elektrochemischen Nebenreaktionen auftreten. Der Grund dafür ist wiederum, daß nur eine Ionensorte durch den Festelektrolyten gelangen kann. Die Stromausbeute einer solchen Natrium/Schwefel-Speicherzelle liegt daher etwa bei 100 %. Bei diesen elektrochemischen Speicherzellen ist das Verhältnis von Energieinhalt zum Gesamtgewicht einer solchen Speicherzelle im Vergleich zum Bleiakkumulator sehr hoch, da die Reaktionsstoffe leicht sind und bei der elektrochemischen Reaktion viel Energie frei wird.

Die elektrochemischen Speicherzellen dieser Bauart haben jedoch den Nachteil, daß es bei ihnen zu einem Bruch der Festelektrolyten kommen kann, wenn eine zu hohe Spannung an die Speicherzellen angelegt wird. Eine Überalterung oder eine mechanische Beschädigung der Festelektrolyten kann ebenfalls zu ihrem Bruch führen. Die Folge davon ist, daß Natrium und Schwefel zusammenfließen und direkt miteinander reagieren. Hierdurch kommt es zu einer starken Erwärmung der Speicherzelle, so daß es im ungünstigsten Fall zu einer Zerstörung des Zellgehäuses oder zu einer Explosion kommen kann.

Aus der DE-A-25 51 604 ist eine elektrochemische Speicherzelle bekannt, die mit einem Sicherheitseinsatz versehen ist, der bei einem Festelektrolytbruch das Zusammenfließen von Natrium und Schwefel verhindern soll. Dieser Sicherheitseinsatz bringt den Nachteil mit sich, daß der Festelektrolyt nur eine einfache Geometrie aufweisen kann, insbesondere nur als einseitig geschlossenes Rohr auszubilden ist. Dadurch wird die Leistungsdichte der Speicherzelle begrenzt. Da ein solcher Sicherheitseinsatz praktisch die gleiche Fläche besitzen muß wie der Festelektrolyt, ist der Gewichtsbeitrag des Sicherheitseinsatzes im Vergleich zum Gesamtgewicht der Speicherzelle nicht mehr vernachlässigbar, was wiederum die Leistungsdichte und die Energiedichte einer solchen Speicherzelle verringert.

Aus der FR-A-2 153 134 ist ein Akkumulator bekannt, der auf der Basis von Natrium und Schwefel arbeitet. Der Akkumulator weist eine Vielzahl von Festelektrolytrohren auf, die durch Kanäle miteinander und mit einem Vorratsbehälter für Natrium verbunden sind, aus dem der Zufluß des Natriums in die Festelektrolytrohre gesichert wird. Für alle Festelektrolytrohre ist ein gemeinsamer Kathodenraum vorgesehen, in welchem diese angeordnet sind. Nachteil ist hierbei, daß beim Bruch der Festelektrolytrohre größere Mengen von Natrium und Schwefel direkt zusammenfließen können.

Aus der US-A-4 135 040 ist ein flächig ausgebildeter ionenleitender Festelektrolyt bekannt, dessen Oberfläche durch entsprechende Ausgestaltung in Form von wellenförmigen Erhöhungen, bzw. zahnartigen Rastern vergrößert ist. Die Dimensionierung der Oberflächenvergrößert ist. Die Dimensionierung der Oberflächenvergrößerung ist jedoch gering im Vergleich zur Dicke des Festelektrolyten.

Aus der US-A-4 246 325 ist eine elektrochemische Speicherzelle auf der Basis von Natrium und Schwefel bekannt, die nach außenhin von einem metallischen Gehäuse begrenzt ist, das becherför"mig ausgebildet ist. Innerhalb des Gehäuses ist ein ebenfalls becherförmiger Festelektrolyt ausgebildet, über dessen Öffnung ein Vorratsbehälter für Natrium angeordnet ist. Innerhalb des Festelektrolyten ist ein Sicherheitsbehälter angeordnet, der mit dem Vorratsbehälter für das Natrium in Verbindung steht, und an seiner Unterseite eine Öffnung aufweist, über welche das Natrium in den Innenbereich des Festelektrolyten gelangen kann. Die im Sicherheitsbehälter vorgesehene Öffnung für den Austritt des Natriums ist verschließbar. Der zwischen dem Sicherheitsbehälter und dem Festelektrolyten vorgesehe. Spalt ist sehr eng ausgebildet. Hierdurch wird zwar das Zusammenfließen von größeren Mengen an Natrium und Schwefel beim Bruch des Festelektrolyten vermieden, die Leistungsdichte jedoch stark gemindert.

Der Erfindung liegt deshalb die Aufgabe zugrunde, eine Speicherzelle zu schaffen, bei der beim Bruch des Festelektrolyten das Zusammenfließen größerer Mengen von Natrium und Schwefel unterbunden wird, und die dennoch eine hohe Leistungs- und Energiedichte aufweist.

Diese Aufgabe wird erfindungsgemäß durch die kennzeichnenden Merkmale des Patentanspruches 1 gelöst.

Erfindungsgemäß ist jeder Stromkollektor, der zwischen zwei Auswölbungen eingreift mit dem metallischen Gehäuse der Speicherzelle elektrisch leitend verbunden.

Bei der erfindungsgemäßen Speicherzelle besitzt der Festelektrolyt im wesentlichen eine becherartige Form. Seine Mantelflächen sind erfindungsgemäß mit nach außen gerichteten Auswölbungen versehen. Die Auswölbungen sind als hohle Rippen ausgebildet. Alle Auswölbungen sind radial nach außen gerichtet. Jede Auswölbung verläuft vom offenen Ende des Festelektrolyten längs dessen gesamter Außenfläche bis wieder zum offenen Ende des Festelektrolyten.

Die Innenräume aller Auswölbungen stehen in direktem Kontakt mit dem Innenbereich des Festelektrolyten. Bei der erfindungsgemäßen Speicherzelle, bei der der Innenbereich des Festelektrolyten als Anodenraum dient, ist ein Sicherheitseinsatz vorgesehen, der innerhalb des Festelektrolyten angeordnet ist. Dieser ist becherförmig ausgebildet. An seinem geschlossenen Ende, das in geringem Abstand vom geschlossenen Ende des Festelektrolyten angeordnet ist, weist er wenigtstens eine Öffnung auf. Über diese Öffnung steht der Innenbereich des Sicherheitseinsatzes mit den Innenräumen der Auswölbungen in Verbindung. Die Innenräume der Auswölbungen enthalten die kleinere Natriummenge. Die größere Natriummenge befindet sich im Innenbereich des Sicherheitseinsatzes, der gleichzeitig als Natrium-Vorratsraum dient. Der Sicherheitseinsatz wird durch mindestens drei ineinander gesetzte Becher gebildet. Der Außendurchmesser des inneren Bechers ist dabei so groß gewählt, daß seine Außenflächen an den Innenflächen des mittleren Bechers anliegen. Die Abmessungen des mittleren Bechers sind ebenfalls so gewählt, daß seine Außenflächen an den Innenflächen des äußeren Bechers anliegen. Der innere Becher des Sicherheitseinsatzes wird vorzugsweise aus Aluminium gefertigt. Für die Herstellung des mittleren Bechers wird Graphit verwendet. Der äußere Becher des Sicherheitseinsatzes kann aus Stahl hergestellt werden. Das metallische Gehäuse, welches die Speicherzelle begrenzt, ist ebenfalls becherförmig ausgebildet. Vorzugsweise besteht es aus zwei ineinandergesetzten Bechern, wobei der innere aus Aluminium und der äußere aus Stahl gefertigt ist. Die Abmessungen des inneren Bechers sind so gewählt, daß seine Außenflächen an den Innenflächen des äußeren Bechers anliegen. Wie bereits oben erwähnt, dient das Innere des Festelektrolyten bei dem hier beschriebenen Ausführungsbeispiel als Anodenraum, während der Kathodenraum zwischen dem Festelektrolyten und dem metallischen Gehäuse angeordnet ist. Da der innere Becher des metallischen Gehäuses aus Aluminium gefertigt ist, sind seine mit der Katholytsubstanz in Berührung kommenden Oberflächen mit einer leitenden Schutzschicht versehen. Der innere Becher des Metallgehäuses ist zusätzlich mit radial angeordneten Stromkollektoren versehen. Es handelt sich hierbei um Aluminiumbleche, die ebenfalls mit einer leitenden Schutzschicht versehen sind. Die Aluminiumbleche sind so angeordnet, daß jeweils ein Blech zwischen zwei beachbarten Auswölbungen des Festelektrolyten eingreift. Zwischen jeweils einer Auswölbung des Festelektrolyten und einem Stromkollektor ist ein mit Schwefel getränkter Graphitfilz angeordnet. Die Auswölbungen des Festelektrolyten sind innen vorzugsweise mit einem kapillaraktiven Material ausgefüllt. Dieses garantiert den gleichmäßigen Transport des Natriums zu den Begrenzungsflächen der Auswölbungen.

Durch die Anordnung des speziell ausgebildeten Sicherheitseinsatzes innerhalb des Festelektrolyten wird bei einem Bruch desselben das Zusammenfließen von Natrium und Schwefel vermieden beziehungsweise zeitlich verzögert. Durch die spezielle Geometrie des Festelektrolyten weist die Speicherzelle trotz der oben beschriebenen Sicherheitsmaßnahmen eine große Leistungsdichte auf.

Bei einer nicht erfindungsgemäßen Variante ist der Innenbereich des Festelektrolyten kleiner ausgebildet als bei dem oben beschriebenen Beispiel. Seine Mantelflächen weisen wiederum Auswölbungen auf, die auch hierbei als hohle, schmale Rippen ausgebildet sind. Das Innere des Festelektrolyten dient hierbei als Anodenraum und ist mit Natrium ausgefüllt, während der Kathodenraum zwischen dem Festelektrolyten und dem Metallgehäuse angeordnet ist. Im Inneren des Festelektrolyten ist bei diesem Ausführungsbeispiel kein Sicherheitseinsatz vorgesehen. Die Innenräume der Auswölbungen, insbesondere der Rippen, können bei diesem Ausführungsbeispiel mehr Natrium aufnehmen als der übrige Innenbereich des Festelektrolyten. Der Verschluß der Speicherzelle erfolgt hierbei durch eine Scheibe aus Beta-Aluminiumoxid, die den Anoden- und Kathodenraum verschließt und mit dem Festelektrolyten und dem Metallgehäuse verbunden ist. Über dieser Scheibe ist ein Vorratsbehälter für Natrium vorgesehen, der über eine oder mehrere Öffnungen in der Beta-Aluminium-Scheibe mit dem Anodenraum verbunden ist.

Die Erfindung wird nachfolgend anhand von Zeichnungen erläutert.

Es zeigen :

Figur 1 eine elektrochemische Speicherzelle deren Festelektrolyt mit nach aussen weisenden Rippen versehen ist, im Vertikalschnitt,

Figur 2 eine nicht erfindungsgemäße Variante der in Fig. 1 gezeigten Speicherzelle.

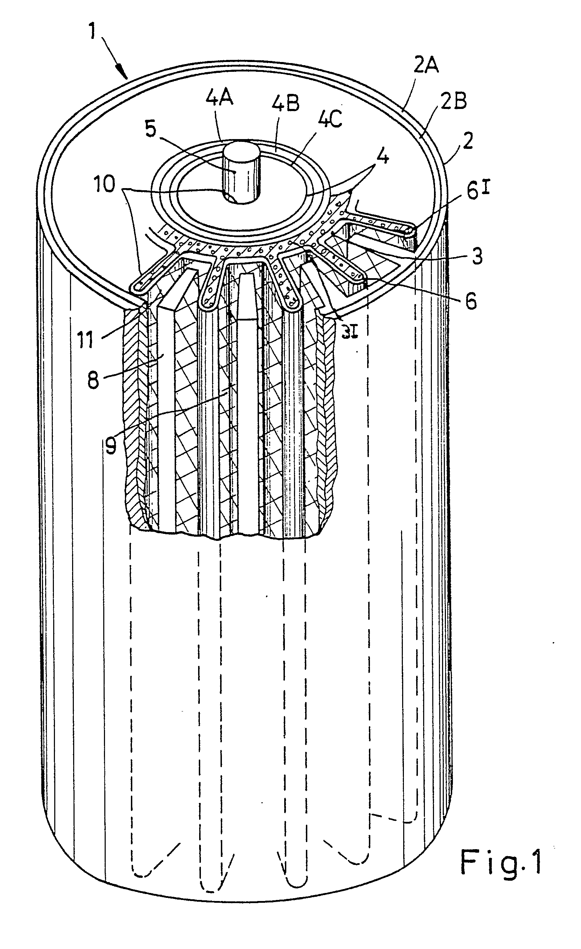

Fig. 1 zeigt die erfindungsgemäße Speicherzelle mit einem metallischen Gehäuse 2, einem Festelektrolyten 3, einem Sicherheitseinsatz 4 und einem Stromabnehmer 5.

Bei dem hier gezeigten Ausführungsbeispiel wird das metallische Gehäuse durch zwei Becher 2A und 2B gebildet, die ineinander gesetzt sind. Der äußere Becher 2A ist aus Stahl gefertigt, während der innere Becher 2B aus Aluminium hergestellt ist. Beide Becher sind gleich hoch. Die

Abmessungen des inneren Bechers 2B sind so gewählt, daß seine Außenflächen an den Innenflächen des äußeren Bechers 2A anliegen. Im Inneren des metallischen Gehäuses 2 ist der Festelektrolyt 3 angeordnet. Dieser weist im wesentlichen die Form eines Bechers auf, dessen Mantelflächen mit nach außen weisenden Rippen 6 versehen sind. Die Rippen 6 sind radial nach außen gerichtet. Vorzugsweise ist der Festelektrolyt 3 mit etwa 15 solcher Rippen 6 versehen. Diese sind innen hohl und zum Inneren des Festelektrolyten hin offen. Jede Rippe 6 ist vom oberen offenen Ende des Festelektrolyten 3 längs der gesamten Außenflächen bis wieder zum oberen offenen Ende des Festelektrolyten 3 geführt.

Der Gesamtdurchmesser des Festelektrolyten 3 mit seinen Rippen 6 ist so gewählt, daß zwischen der äußeren Begrenzung der Rippen 6 und dem metallischen Gehäuse 2 nur ein geringer Abstand von wenigen mm verbleibt. Neben den hohl ausgebildeten Rippen 6 weist der Festelektrolyt 3 noch einen zweiten Bereich auf, der in seinem Inneren liegt. In den Innenbereich des Festelektrolyten 3 ist der Sicherheitseinsatz 4 eingesetzt.

Der Sicherheitseinsatz 4 ist ebenfalls becherförmig ausgebildet und symmetrisch zur Längsachse des Festelektrolyten angeordnet. Sein geschlossenes Ende ist in geringem Abstand vom geschlossenen Ende des Festelektrolyten 3 angeordnet. Der Sicherheitseinsatz 4 wird bei diesem Ausführungsbeispiel durch drei ineinander gesetzte Becher 4A, 4B und 4C gebildet.

Die Abmessungen der drei Becher 4A, 4B und 4C sind so gewählt, daß sie eng aneinander leigen und kein Zwischenraum zwischen den einzelnen Bechern gebildet wird. Alle drei Becher besitzen die gleiche Höhe. Diese ist an die Höhe des Festelektrolyten 3 angepaßt. Der Außendurchmesser des Sicherheitseinsatzes 4 ist so groß gewählt, daß zwischen seiner äußeren Begrenzungsfläche und den weiter innen liegenden Bereichen der den Festelektrolyten 3 bildenden Mantelfläche nur ein schmaler Ringraum 3I verbleibt. Die Breite dieses Ringraumes 3I beträgt maximal 0,5 bis 2 mm. Der Sicherheitseinsatz 4 ist an seinem geschlossenen Ende mit wenigstens einer Öffnung (hier nicht dargestellt) versehen. In diese Öffnung ist vorzugsweise ein Ventil (hier nicht dargestellt) eingesetzt. Dieses verschließt und gibt die Öffnung in Abhängigkeit von der Temperatur frei. Das Ventil ist so ausgebildet, daß es bei einem Ansteigen der Temperatur über die Betriebstemperatur der Speicherzelle die Öffnung verschließt. Das Innere des Sicherheitseinsatzes 4 ist mit Natrium gefüllt. Das Gleiche gilt für den zwischen dem Sicherheitseinsatz 4 und dem Festelektrolyten 3 stehenden Ringraum 3I. Die Innenräume 6I der Rippen 6 enthalten ebenfalls Natrium. Sie sind zusätzlich mit einem kapillaraktiven Material 20 ausgefüllt. Dieses bewirkt den gleichmäßigen Transport des Natriums zu den Innenflächen der Rippen 6. Der gesamte Innenbereich des Festelektrolyten 3, hierin ist auch der Innenbereich des Sicherheitseinsatzes 4 eingeschlossen, dient bei dieser Ausführungsform der Speicherzelle als Anodenraum 10. Als anodischer Stromabnehmer dient ein in das Innere des Sicherheitseinsatzes 4 hineinragender Metall- oder Graphitstab 5.

Der zwischen dem metallischen Gehäuse 2 und dem Festelektrolyten 3 verbleibende Ringraum, der durch die Rippen 6 in mehrere voneinander teilweise getrennte Bereiche aufgeteilt ist, dient hier als Kathodenraum 11. Zwischen je zwei Rippen 6 ist innerhalb dieses Kathodenraumes 11 jeweils ein Stromkollektor 8 angeordnet. Er wird durch ein Aluminiumblech 8 gebildet, das mit seiner Längskante mit dem inneren Becher 2B des metallischen Gehäuses 2 elektrisch leitend verbunden ist. Die Stromkollektoren 8 greifen zwischen die Rippen 6 ein. Ihre Abmessungen sind so gewählt daß sie bis fast an den Festelektrolyten 3 heranreichen. Die Länge der Stromkollektoren 8 entspricht etwa der Höhe des becherförmigen Gehäuses 2. Zwischen je einer Rippe 6 und einem Stromkollektor 8 ist ein mit Schwefel getränkter Graphitfilz 9 angeordnet, der den verbleibenden Zwischenraum vollständig ausfüllt. Als kathodischer Stromabnehmer dient bei dieser Speicherzelle das Metallgehäuse 2.

Den Verschluß der Speicherzelle (hier nicht dargestellt) bildet eine Scheibe aus Beta-Aluminiumoxid. Diese ist gegebenenfalls unter Zwischenfügung einer Dichtung kraftschlüssig mit dem Gehäuse 2 und dem Festelektrolyten 3 verbunden. Über dieser Scheibe ist ein Vorratsbehälter für Natrium angeordnet (hier nicht dargestellt), der durch ein einseitig geschlossenes Rohr begrenzt ist. Das Rohr ist mit seiner Öffnung gegen die den Verschluß bildende Beta-Aluminiumoxid-Scheibe gesetzt und kraftschlüssig mit dieser verbunden. Besteht das Rohr aus Aluminium, so kann die Verbindung mit der Scheibe unter Anwendung des Thermo-Kompressionsverfahrens erfolgen. Der Vorratsbehälter ist durch eine oder mehrere Öffnungen mit dem Innenbereich des Sicherheitseinsatzes 4 verbunden. Der in den Sciherheitseinsatz 4 hineinragende anodische Stromabnehmer durchsetzt den Vorratsbehälter und steht einige mm über das den Vorratsbehälter begrenzende Rohr nach außen über. Auf den Vorratsbehälter für das Natrium kann bei dieser Ausführungsform auch verzichtet werden, da der Innenbereich des Sicherheitseinsatzes ein so großes Volumen aufweist, das als Vorratsbehälter für das Natrium ausreicht.

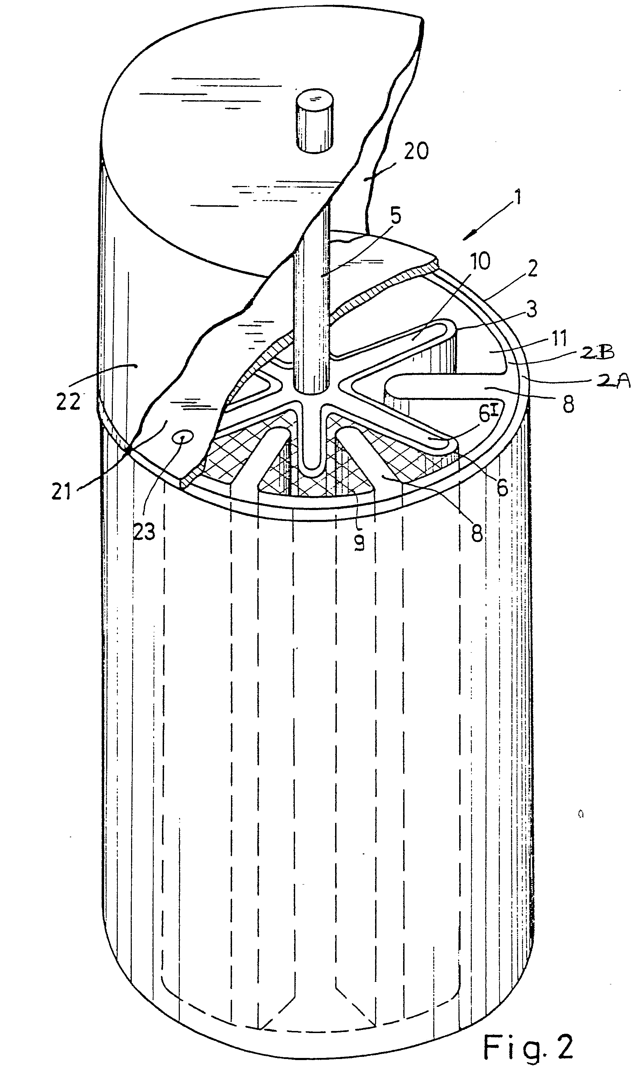

Fig. 2 zeigt eine nicht erfindungsgemäße Variante der in Fig. 1 dargestellten und in der dazugehörigen Beschreibung erläuterten Speicherzelle. Die hier gezeigte Speicherzelle entspricht im Aufbau im wesentlichen der in Fig. 1 dargestellten Speicherzelle. Der Unterschied zwischen den beiden Speicherzellen 1 besteht in der Geometrie des hier verwendeten Festelektrolyten 3. Dieser ist auch bei der hier gezeigten Ausführungsform innerhalb eines Metallgehäuses 2 angeordnet. Dieses wird wiederum durch zwei Becher 2A und 2B gebildet. Der äußere Becher 2A ist aus Stahl und der innere Becher 2B aus Aluminium hergestellt. Die Abmessungen des inneren Bechers sind so gewählt, daß seine Außenflächen an den Innenflächen des äußeren Bechers 2 anliegen. Beide Becher sind auch hierbei gleich hoch ausgebildet. Im Gegensatz zu dem Festelektrolyten 3 des in Fig. 1 gezeigten Ausführungsbeispiels weist der hier verwendete Festelektrolyt 3 nur einen sehr kleinen Innenbereich auf, während seine Rippen 6 wesentlich größer ausgebildet sind, als die Rippen 6 des in Fig. 1 dargestellten Festelektrolyten 3. Die Rippen 6 sind auch bei dieser Ausführungsform innen hohl und stehen mit dem Innenbereich des Festelektrolyten 3 in Verbindung. Im Gegensatz zu der erfindungsgemäßen Ausführungsform nach Figur 1, ist ein Sicherheitseinsatz bei dieser Variante nicht vorgesehen. Sowohl der Innenbereich des Festelektrolyten 3 als auch die Innenräume 6l der Rippen 6 sind mit Natrium ausgefüllt. Die Innenräume 6l der Rippen 6 sind zusätzlich mit einem kapillaraktiven Material 20 ausgefüllt. Dieses verkleinert das Aufnahmevolumen der Innenräume 6l. Es bewirkt jedoch andererseits einen gleichmäßigen Transport des Natriums zu den inneren Begrenzungsflächen der Rippen 6. Der Innenraum des Festelektrolyten 3 einschließlich der Innenräume 6l der Rippen 6 dienen hierbei als Anodenraum 10.

Der zwischen dem Gehäuse 2 und dem Festelektrolyten 3 verbleibende Bereich, der durch die Rippen 6 des Festelektrolyten 3 in mehrere Teilbereiche unterteilt ist, dient hierbei als Kathodenraum. Ebenso wie bei der in Fig. 1 dargestellten Speicherzelle 1 sind auch hierbei Stromkollektoren 8 vorgesehen. Jeweils ein Stromkollektor 8 greift zwischen zwei Rippen 6 innerhalb des Kathodenraums 11 ein. Die Stromkollektoren 8 sind aus einem Aluminiumblech gefertigt und mit ihrer Längskante am inneren Becher 2B des Gehäuses 2 befestigt. Der Bereich zwischen einer Rippe 6 und einem Stromkollektor 8 ist mit einem Graphitfilz 9 ausgefüllt. Dieser Graphitfilz 9 ist mit Schwefel getränkt. Der Verschluß der Speicherzelle 1 erfolgt durch eine Scheibe 21 aus Beta-ALuminiumoxid, die sowohl den Anodenraum 10 als auch den Kathodenraum 11 verschließt. Über der Scheibe 21 ist ein als Vorratsbehälter dienendes einseitig geschlossenes Rohr 22 angeordnet. Das Rohr ist mit seiner Öffnung gegen die Scheibe 21 gesetzt. Das Innere des Rohres 22 ist vollständig mit Natrium ausgefüllt. Über eine oder mehrere Öffnungen 23 ist der Vorratsbehälter für Natrium mit dem Anodenraum 10 verbunden. In den Festelektrolyten 3 ragt ein anodischer Stromkollektor 5 hinein. Dieser wird durch einen Metall- oder Graphitstab 5 gebildet. Dieser durchsetzt den Vorratsbehälter 22 und steht einige mm über diesen nach außen über.

## Patentansprüche

1. Elektrochemische Speicherzelle (1) auf der Basis von Alkalimetall und Chalkogen mit mindestens einem für die Aufnahme des Anolyten bestimmten Anodenraum (10) und einen für die Aufnahme des Katalyten bestimmten Kathodenraum (11), welche durch einen alkaliionenleitenden im wesentlichen becherförmig ausgebildeten Festelektrolyten (3) voneinander getrennt und von einem mit einer Schutzschicht versehenen metallischen Gehäuse (2) begrenzt sind, wobei in den Festelektrolyten (3) ein Sicherheitseinsatz (4) für das Natrium eingesetzt ist, dadurch gekennzeichnet, daß der Festelektrolyt (3) mehrere radial nach außen gerichtete innen hohle Auswölbungen (6) aufweist, die als hohle Rippen ausgebildet und in definiertem Abstand voneinander angeordnet sind, daß jede Auswölbung (6) vom offenen Ende des Festelektrolyten (3) längs dessen gesamter Außenfläche bis wieder zum offenen Ende des Festelektrolyen (3) geführt ist, und daß zwischen je zwei benachbarten Auswölbungen (6) mindestens ein Stromkollektor (8) eingreift, der mit dem metallischen Gehäuse (2) verbunden ist.

2. Speicherzelle nach Anspruch 1, dadurch gekennzeichnet, daß das Innere des Sicherheitseinsatzes (4) über wenigstens eine Öffnung mit den Innenräumen (6l) der Auswölbungen (6) in Verbindung steht.

3. Speicherzelle nach einem der Ansprüche 1 oder 2, dadurch gekennzeichnet, daß der Sicherheitseinsatz (4) durch mindestens drei ineinander gesetzte Becher (4A, 4B und 4C) gebildet und der innere Becher (4C) aus Aluminium, der mittlere Becher aus Graphit und der äußere Becher aus Stahl gefertigt ist.

4. Speicherzelle nach Anspruch 3, dadurch gekennzeichnet, daß der Außendurchmesser des inneren Bechers (4C) so groß gewählt, ist, daß seine Außenflächen an den Innenflächen des mittleren Bechers (4) anliegen, und daß die Abmessungen des mittleren Bechers (4B) so groß gewählt sind, daß seine Außenflächen an den Innenflächen des äußeren Bechers (4A) anliegen.

5. Speicherzelle nach einem der Ansprüche 1 bis 4, dadurch gekennzeichnet, daß der Sicherheitseinsatz (4) im Boden wenigstens eine Öffnung aufweist, die durch ein Ventil verschließbar ist.

6. Speicherzelle nach einem der Ansprüche 1 bis 5, dadurch gekennzeichnet, daß das metallische Gehäuse (2) becherfor"mig ausgebildet und durch zwei ineinandergesetzte Becher (2A, 2B) gebildet ist.

7. Speicherzelle nach Anspruch 6, dadurch gekennzeichnet, daß die Abmessungen des inneren Bechers (2B) des metallischen Gehäuses (2) so gewählt sind, daß seine Außenflächen an den Innenflächen des äußeren Bechers (2A) des metallischen Gehäuses anliegen, und daß der innere Becher (2B) des Gehäuses (2) mit einer elektrisch leitenden Schutzschicht versehen ist.

8. Speicherzelle nach einem der Ansprüche 6 oder 7, dadurch gekennzeichnet, daß der innere Becher (2B) des metallischen Gehäuses (2) aus Aluminium und der äußere Becher (2A) des metallischen Gehäuses (2) aus Stahl gefertigt ist.

9. Speicherzelle nach einem der Ansprüche 6 bis 8, dadurch gekennzeichnet, daß der innere Becher (2B) des etallischen Gehäuse (2) mit radial angeordneten als Stromkollektoren (8) dienenden Aluminiumblechen verbunden ist.

10. Speicherzelle nach einem der Ansprüche 1 bis 9, dadurch gekennzeichnet, daß die Stromkollektoren (8) mit einer elektrisch leitenden Schutzschicht versehen sind.

11. Speicherzellen nach einem der Ansprüche 1 bis 10, dadurch gekennzeichnet, daß der Anodenraum (10) und der Kathodenraum (11) durch eine gemeinsame Scheibe (21) aus Betaaluminiumoxid verschlossen sind, die mit dem Festelektrolyten (3) und dem Gehäuse (2) verbunden ist.

12. Speicherzelle nach Anspruch 11, dadurch gekennzeichnet, daß über der Scheibe (21) ein Natriumvorratsbehälter (22) angeordnet ist, der durch ein einseitig geschlossenes Rohr begrenzt ist, das den gleichen Durchmesser wie das metallische Gehäuse (2) aufweist.

13. Speicherzelle nach einem der Ansprüche 1 bis 12, dadurch gekennzeichnet, daß der Anodenraum (10) über eine oder mehrere Öffnungen (23) in der Betaaluminiumoxidscheibe (21) mit dem Vorratsbehälter (22) verbunden ist.

## Claims

1. Electrochemical storage cell (1) based on alkaline metal and chalkogen with at least one anode region (10) intended to hold the anolyte and one cathode region (11) intended to hold the catalyte, which regions are separated from one another by an alkali metal ion-conductive solid electrolyte (3), designed essentially cup-shaped, and are bounded by a metal casing (2) provided with a protective layer, a safetey insert (4) for the sodium being inserted in the solid electrolyte (3), characterised in that the solid electrolyte (3), has several radially outward directed, inwardly hollow convexities (6) which are designed as hollow ribs and are arranged at a defined distance from one another, in that each convexities (6) which are designed as hollow ribs and are arranged at a defined distance from one another, in that each convexity (6) is taken from the open end of the solid electrolyte (3) along its entire outer surface again to the open end of the solid electrolyte (3), and in that at least one current collector (8) engages between each pair of neighbouring convexities (6) and is connected to the metal casing (2).

2. Storage cell according to Claim 1, characterised in that the interior of the safety insert (4) is in connection with the interior regions (6I) of the convexities (6) by at least one opening.

3. Storage cell according either Claim 1 or 2, characterised in that the safety insert (4) is formed by at least three cups (4A, 4B and 4C) inserted one inside the other and the inner cup (4C) is made of aluminium, the middle cup is made of graphite and the outer cup is made of steel.

4. Storage cell according to Claim 3, characterised in that the outside diameter of the inner cup (4C) is chosen to be large enough for its outer surfaces to contact the inner surfaces of the middle cup (4), and in that the dimensions of the middle cup (4B) are chosen to be large enough for its outer surfaces to be in contact with the inner surfaces of the outer cup (4A).

5. Storage cell according to one of Claims 1 to 4, characterised in that the safety insert (4) has in the base at least one opening which is closeable by means of a valve.

6. Storage cell according to one of Claims 1 to 5, characterised in that the metal casing (2) is designed cup-shaped and is formed by two cups (2A, 2B) inserted one inside the other.

7. Storage cell according to Claim 6, characterised in that the dimensions of the inner cup (2B) of the metal casing (2) are chosen such that its outer surfaces are in contact with the inner surfaces of the outer cup (2A) of the metal casing, and in that the inner cup (2B) of the casing (2) is provided with an electrically conductive protective layer.

8. Storage cell according to either Claim 6 or 7, characterised in that the inner cup (2B) of the metal casing (2) is made of aluminium and the outer cup (2A) of the metal casing (2) is made of steel.

9. Storage cell according to one of Claims 6 to 8, characterised in that the inner cup (2B) of the metal casing (2) is connected to radially arranged aluminium plates serving as current collectors (8).

10. Storage cell according to one of Claims 1 to 9, characterised in that the current collectors (8) are provided with an electrically conductive protective layer.

11. Storage cells according to one of Claims 1 to 10, characterised in that the anode region (10) and the cathode region (11) are closed off by a common disc (21) of beta aluminium oxide, which is connected to the solid electrolyte (3) and the casing (2).

12. Storage cell according to Claim 11, characterised in that a sodium supply vessel (22) is arranged above the disc (21) and is bounded by a tube which is closed on one side and has the same diameter as the metal casing (2).

13. Storage cell according to one of Claims 1 to 12, characterised in that the anode region (10) is connected to the supply vessel (22) via one or more openings (23) in the beta aluminium oxide disc (21).

## Revendications

1. Cellule électrochimique d'accumulation (1) à base de métal alcalin et de chalcogène, comprenant au moins un compartiment anodique (10) destiné à recevoir l'anolyte, ainsi qu'un compartiment cathodique (11) destiné à recevoir le catalyte, ces compartiments étant séparés l'un de l'autre par un électrolyte solide (3) conducteur des ions alcalins et réalisé sensiblement en forme de cuvette, et étant délimités par un boîtier métallique (2) muni d'une couche protectrice, une garniture interne de sécurité (4) pour le sodium étant incorporée dans l'électrolyte solide (3), caractérisée par le fait que l'électrolyte solide (3) présente plusieurs ailerons bombés (6) intérieurement creux, dirigés radialement vers l'extérieur, réalisés en tant que nervures creuses et agencés avec un espacement mutuel déterminé ; par le fait que chaque aileron bombé (6) s'étend de l'extrémité ouverte de l'électrolyte solide (3) et longe toute sa surface externe pour gagner de nouveau l'extrémité ouverte de cet électrolyte solide (3) ; et par le fait qu'au moins un collecteur de courant (8), relié au boîtier métallique (2), s'engage entre deux ailerons bombés (6) respectivement voisins.

2. Cellule d'accumulation selon la revendication 1, caractérisée par le fait que l'espace intérieur de la garniture interne de sécurité (4) est en communication, par l'intermédiaire d'au moins un orifice, avec les espaces internes (6I) des ailerons bombés (6).

3. Cellule d'accumulation selon l'une des revendications 1 ou 2, caractérisée par le fait que la garniture interne de sécurité (4) est formée par au moins trois récipients (4A, 4B et 4C) introduits les uns dans les autres, le récipient interne (4C) consistant en de l'aluminium, le récipient central étant constitué par du graphite et le récipient externe étant fabriqué en acier.

4. Cellule d'accumulation selon la revendication 3, caractérisée par le fait que le diamètre externe du récipient interne (4C) est choisi d'une dimension telle que ses surfaces externes soient appliquées contre les surfaces internes du récipient central (4B) ; et par le fait que les dimensions du récipient central (4B) sont choisies telles que ses surfaces externes soient appliquées contre les surfaces internes du récipient externe (4A).

5. Cellule d'accumulation selon l'une des revendications 1 à 4, caractérisée par le fait que la garniture interne de sécurité (4) est percée, en son fond, d'au moins un orifice pouvant être obturé par une valve.

6. Cellule d'accumulation selon l'une des revendications 1 à 5, caractérisée par le fait que le boîtier métallique (2) est réalisé en forme de cuvette et est constitué par deux récipients (2A, 2B) introduits l'un dans l'autre.

7. Cellule d'accumulation selon la revendication 6, caractérisée par le fait que les dimensions du récipient interne (2B) du boîtier métallique (2) sont choisies telles que ses surfaces externes soient appliquées contre les surfaces internes du récipient externe (2A) du boîtier métallique ; et par le fait que le récipient interne (2B) dudit boîtier (2) est muni d'une couche protectrice électriquement conductrice.

8. Cellule d'accumulation selon l'une des revendications 6 ou 7, caractérisée par le fait que le récipient interne (2B) du boîtier métallique (2) consiste en de l'aluminium et le récipient externe (2A) de ce boîtier métallique (2) est fabriqué en acier.

9. Cellule d'accumulation selon l'une des revendications 6 à 8, caractérisée par le fait que le récipient interne (2B) du boîtier métallique (2) est relié à des tôles d'aluminium qui sont disposées radialement et servent de collecteurs de courant (8).

10. Cellule d'accumulation selon l'une des revendications 1 à 9, caractérisée par le fait que les collecteurs de courant (8) sont dotés d'une couche protectrice électriquement conductrice.

11. Cellule d'accumulation selon l'une des revendications 1 à 10, caractérisée par le fait que le compartiment anodique (10) et le compartiment cathodique (11) sont obturés par un disque commun (21) en oxyde d'aluminium bêta, qui est relié à l'électrolyte solide (3) et au boîtier (2).

12. Cellule d'accumulation selon la revendication 11, caractérisée par le fait qu'un récipient (22) de réserve en sodium, situé au-dessus du disque (21), est délimité par un tube fermé d'un côté et présentant le même diamètre que le boîtier métallique (2).

13. Cellule d'accumulation selon l'une des revendications 1 à 12, caractérisée par le fait que le compartiment anodique (10) est raccordé au récipient (22) de réserve en sodium par l'intermédiaire d'un ou de plusieurs orifices (23) ménagés dans le disque (21) en oxyde d'aluminium bêta.

Fig.1

Fig. 2